# DEMANDE DE BREVET EUROPEEN

(11) **EP 1 020 338 A1**
(43) Date de publication de la demande: **19.07.2000**
(21) Numéro de dépôt: 00400050.1
(22) Date de dépôt: 11.01.2000
(51) Int. Cl.: B60R 25/02

(54) **Dispositif d'antivol comportant un interrupteur électrique pour la détection de l'introduction d'une clef**

(30) Priorité: 15.01.1999 FR 9900403
(71) Demandeur: Valeo Securité Habitacle, 94042 Créteil (FR)
(72) Inventeur: Canard, Louis, 58000 Nevers (FR)
(74) Mandataire: Lenne, Laurence

(57) **Abrégé**

L'invention propose un dispositif d'antivol du type comportant un interrupteur électrique pour la détection de l'introduction d'une clef dans l'antivol sous l'action d'un poussoir (50) de commande qui est monté mobile en coulissement, sous l'action de la clef et à l'encontre d'un effort élastique, caractérisé en ce que le poussoir (50) est monté coulissant dans un logement (52) d'un corps de rotor (16, 18) comportant des moyens (62) de guidage en coulissement de la partie d'extrémité avant (86) du poussoir, et en ce que la partie d'extrémité arrière (100) du poussoir, sur laquelle agit la clef, coopère avec des moyens (66) du corps (16, 18) formant rampe pour provoquer un déplacement de cette partie arrière, selon une direction inclinée par rapport à la direction de coulissement entre une position reculée et basse de repos du poussoir et une position avancée et haute de déclenchement.

## Description

La présente invention concerne dispositif d'antivol, notamment de véhicule automobile.

L'invention concerne plus particulièrement un antivol du type comportant un interrupteur électrique pour la détection de l'introduction d'une clef dans l'antivol.

Un tel interrupteur est notamment utilisé en association avec un circuit électrique assurant différentes fonctions selon les manipulations de l'antivol par le conducteur du véhicule, l'introduction de la clef dans l'antivol étant notamment détectée préalablement à toute autre manoeuvre du conducteur en vue par exemple de déclencher le préchauffage du moteur, le plus rapidement possible, notamment dans le cas d'un moteur diesel.

Selon une conception connue, l'interrupteur est du type comportant un contact fixe et un contact mobile susceptible de se déplacer par rapport au contact fixe, entre une position ouverte de l'interrupteur vers laquelle il est rappelé élastiquement et une position fermée de l'interrupteur, sous l'action l'un poussoir monté mobile en coulissement sous l'action de la clef et à l'encontre d'un effort élastique qui rappelle le poussoir vers sa position de repos en l'absence de clef.

Le poussoir sur laquelle la clef agit directement ou indirectement est rappelé élastiquement vers une position de repos car il doit, lorsque la clef est retiré de l'antivol, cesser d'agir sur le contact mobile afin de permettre l'ouverture à nouveau de l'interrupteur.

La présente invention a pour objet de proposer une nouvelle conception d'un antivol dans laquelle le poussoir est particulièrement simple et compact et qui peut notamment être intégré au rotor de commande du verrou de l'antivol, tout en évitant des coincements accidentels du poussoir dans l'une ou l'autre de ses deux positions extrêmes.

Dans ce but, l'invention propose un dispositif d'antivol, notamment de véhicule automobile, du type comportant un interrupteur électrique pour la détection de l'introduction, d'arrière en avant, d'une clef dans l'antivol sous l'action d'un poussoir de commande du déclenchement de l'interrupteur qui est monté mobile en coulissement, dans les deux sens et parallèlement à la direction d'introduction de la clef, sous l'action de la clef et à l'encontre d'un effort élastique qui rappelle le poussoir en butée vers une position arrière de repos en l'absence de clef, caractérisé en ce que le poussoir est monté coulissant longitudinalement dans un logement d'un corps comportant des moyens de guidage en coulissement de la partie d'extrémité avant du poussoir, et en ce que la partie d'extrémité arrière du poussoir, sur laquelle agit la clef, coopère avec des moyens du corps formant rampe pour provoquer un déplacement de cette partie arrière, selon une direction inclinée par rapport à la direction de coulissement entre une position reculée et basse de repos, correspondant à la position arrière de repos du poussoir et une position avancée et haute de déclenchement.

Selon d'autres caractéristiques de l'invention :
- la partie d'extrémité avant du poussoir se présente sous la forme d'une barre transversale de déclenchement dont les extrémités opposées sont guidées dans des rainures parallèles à la direction de coulissement du poussoir qui sont formées dans ledit corps ;
- la barre transversale avant du poussoir est cylindrique circulaire ;
- le poussoir comporte un corps en forme de plaque, sensiblement parallèle à la direction d'introduction de la clef, qui comporte une lumière longitudinale à travers laquelle s'étend verticalement un ergot du corps dont la face transversale arrière coopère avec un bord transversal arrière de la lumière pour constituer des moyens à rampe qui provoquent le déplacement de la partie d'extrémité arrière du poussoir de se position basse reculée vers sa position haute avancée ;
- la face transversale arrière de l'ergot est inclinée de bas en haut et d'arrière en avant pour constituer une rampe de montée du poussoir vers sa position haute avancée, et le bord transversal arrière de la lumière du poussoir est arrondi pour coopérer avec la rampe de montée ;
- le bord transversal arrière du corps du poussoir coopère avec des moyens formant rampe du corps pour provoquer le déplacement de la partie d'extrémité arrière du poussoir de sa position haute avancée vers sa position basse reculée ;
- le bord transversal arrière du corps du poussoir est arrondi pour coopérer avec une face transversale du corps qui est inclinée de bas en haut et d'arrière en avant pour constituer une rampe de descente, parallèle à la rampe de montée, du poussoir vers sa position basse arrière ;
- la position arrière de repos du poussoir est déterminée par la venue en butée de la portion d'extrémité arrière du poussoir contre une portion de face transversale en vis-à-vis du corps ;
- le corps est un corps de rotor de verrou monté tournant autour d'un axe parallèle à la direction d'introduction de la clef ;
- le plan qui contient la direction de coulissement de la partie d'extrémité avant du poussoir contient l'axe de rotation du rotor ;
- le poussoir est une pièce moulée en matière plastique ;
- le poussoir est rappelé élastiquement vers sa position de repos par des moyens élastiques de l'interrupteur électrique.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en section longitudinale des principaux composants d'un dispositif d'antivol réalisé conformément aux enseignements de l'invention et sur laquelle le poussoir est illustré en position basse reculée en l'absence d'une clef conforme insérée dans l'antivol ;
- la figure 2 est une vue à plus grande échelle d'une partie de la figure 1 illustrant des détails de conception du poussoir et du corps de rotor du verrou de l'antivol ;
- la figure 3 est une vue similaire à celle de la figure 2 sur laquelle le poussoir est illustré en position haute avancée reculée en présence d'une clef conforme insérée dans l'antivol;
- la figure 4 est une vue à plus grande échelle qui illustre en perspective éclatée le poussoir et le tronçon d'extrémité avant du rotor qui le reçoit selon l'invention, partiellement en section par un plan longitudinal vertical ;
- la figure 5 est une vue similaire à celle de la figure 6 sur laquelle le poussoir est illustré en position basse reculée ; et
- la figure 6 est une vue similaire à celle de la figure 5 sur laquelle le poussoir est illustré en position haute avancée.

Dans la description qui va suivre, on utilisera les termes "horizontal", "vertical", "supérieur", "inférieur", etc. à titre non limitatif, notamment en référence aux figures, afin de faciliter les explications et la compréhension de la description et des revendications.

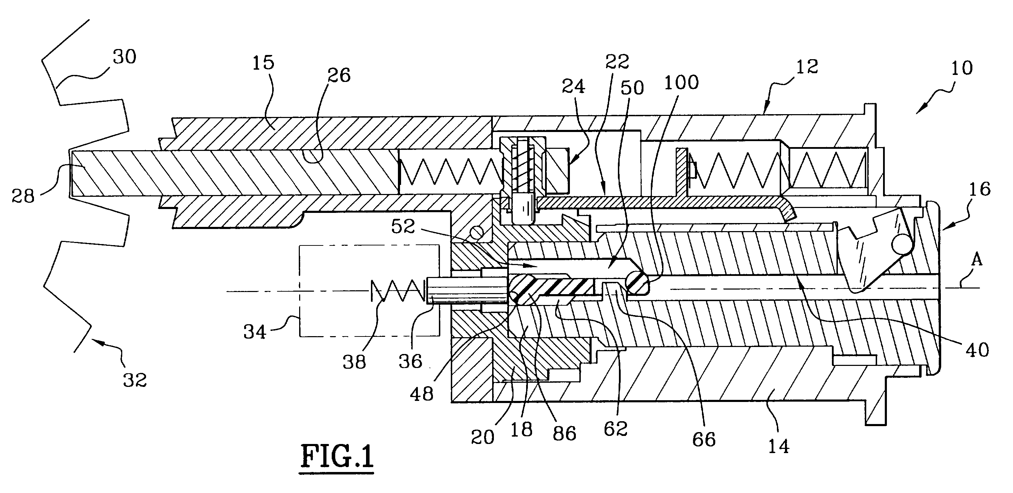

On a représenté à la figure 1 les principaux composants d'un exemple de réalisation d'un dispositif 10 d'antivol de véhicule automobile.

Celui-ci comporte un boîtier 12 en deux parties arrière 14 et avant 15.

La partie arrière 14 reçoit à rotation, autour d'un axe longitudinal A, un rotor 16 dont le tronçon cylindrique d'extrémité avant 18 entraîne en rotation un organe de sortie 20 formant came qui commande les déplacements en coulissement longitudinal dans les deux sens, selon une direction parallèle à l'axe A, d'une tirette 22 de commande des déplacements d'un pêne de verrouillage 24.

Le pêne 24 est guidé en coulissement dans une glissière 26 formée dans la partie avant 15 du boîtier 12 de manière que son extrémité longitudinale avant 28 fasse saillie axialement au delà de la partie 15 pour être reçue dans une des rainures axiales 30 appartenant à un arbre 32 de la colonne de direction à laquelle est associé le dispositif d'antivol 10.

Selon une conception elle aussi connue, le dispositif d'antivol 10 comporte des moyens électriques formant commutateur et interrupteur pour la commande de différents équipements électriques du véhicule.

On a représenté de manière schématique par un cadre en trait mixte 34 le corps d'un interrupteur électrique dont une tige de déclenchement 36 fait saillie axialement vers l'arrière pour s'étendre ici au moins en partie axialement à l'intérieur du rotor 16 avec son organe de sortie 20.

Comme le rotor 16 est prévu pour tourner autour de son axe A, la tige 36 est coaxiale à l'axe A, et l'interrupteur 34 comporte des moyens élastiques 38 correspondant à un rappel en position normalement ouverte, ou normalement fermée, de l'interrupteur 34 qui sollicite axialement la tige de commande 36 vers l'arrière, c'est-à-dire vers la droite en considérant la figure 1, dans une position dite de repos de l'interrupteur.

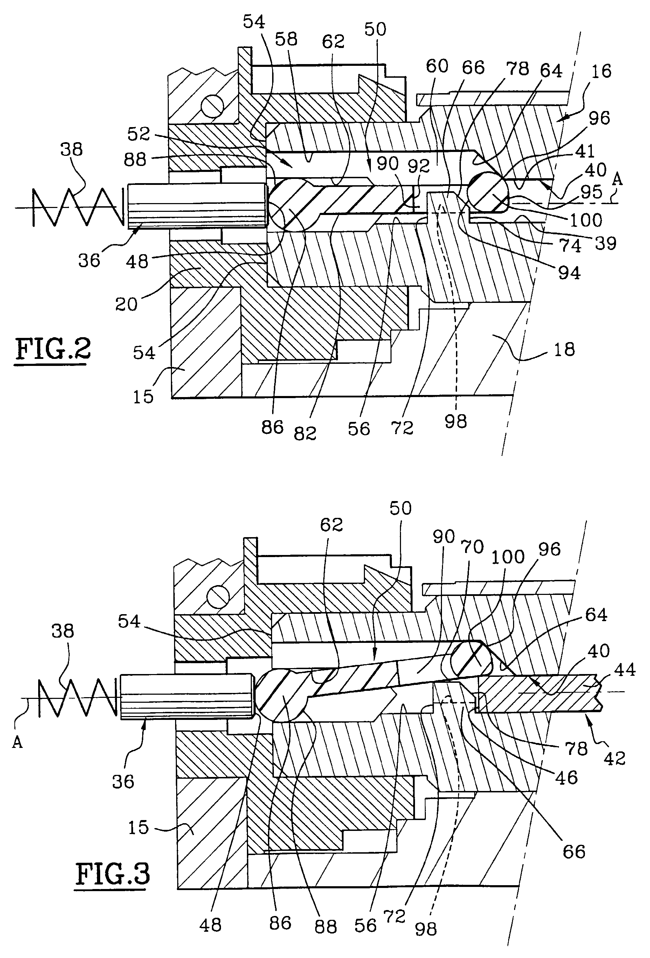

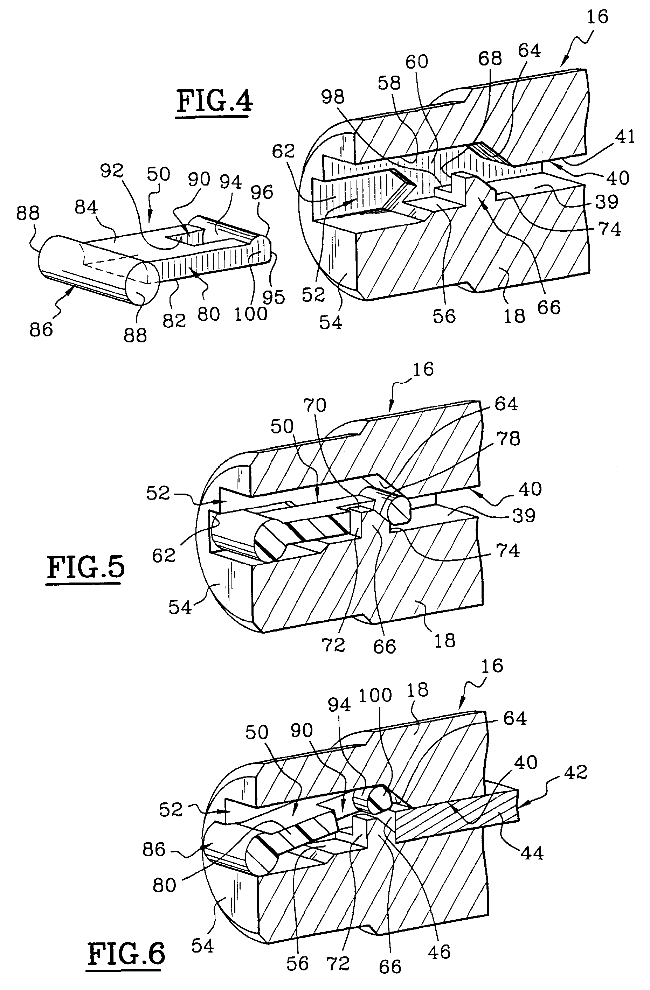

Le rotor 16 comporte, de manière connue, un canal ou couloir axial 40, ici de section transversale rectangulaire, qui reçoit la tige ou corps 42 d'une clef de commande du dispositif d'antivol 10 dont on a représenté, aux figures 3 et 6, le tronçon d'extrémité axiale avant 44 délimité par une face transversale d'extrémité 46.

Conformément aux enseignements de l'invention, en vue de permettre la détection de la présence d'une clef conforme 42 en position introduite dans le rotor 16, pour la commande en rotation de ce dernier, il est prévu d'agir sur la face transversale d'extrémité arrière 48 de la tige 36 de commande de l'interrupteur 34 par l'intermédiaire d'un poussoir monobloc 50 qui est une pièce moulée, par exemple en matière plastique, agencée à l'intérieur du tronçon d'extrémité avant 18 du rotor 16.

A cet effet, le tronçon d'extrémité avant 18 comporte un logement 52 qui s'étend globalement axialement d'avant en arrière et qui débouche d'une part dans la face transversale d'extrémité avant 54 du rotor 16, 18 et vers l'arrière dans le couloir 40.

Le logement 52 est globalement délimité par deux faces horizontales parallèles à l'axe A, inférieure 56 et supérieure 58, qui sont espacées verticalement l'une de l'autre d'une distance supérieure à la hauteur verticale du couloir 40.

Le logement 52 est aussi délimité par deux faces verticales parallèles d'orientation axiale dont l'une 60 est visible sur les figures.

La face horizontale inférieure 56 est située sensiblement dans le même plan horizontal que la face horizontale inférieure 39 du couloir de clef 40.

Chacune des faces latérales verticales 60 comporte dans sa partie d'extrémité avant, une rainure longitudinale d'orientation axiale 62 qui débouche dans la face transversale avant 54 du rotor 16, 18 et dont la hauteur est inférieure à la distance séparant les faces 56 et 58 du logement 52.

La face horizontale supérieure 58 du logement 52 est reliée à la face horizontale supérieure 41 du couloir de clef 40 par une face transversale 64 qui est inclinée de bas en haut et d'arrière en avant, ici selon un angle d'environ 45°, par rapport à l'axe A.

Le logement 62 comporte aussi un ergot 66 de commande des mouvements du poussoir 50.

L'ergot s'étend verticalement vers le haut, à partir de la face horizontale inférieure 56, à l'intérieur du logement 52 et il est délimité transversalement par deux faces latérales parallèles 68, verticalement par une face horizontale supérieure 70, et longitudinalement vers l'avant par une face transversale verticale 72 et vers l'arrière par une face verticale de plus faible hauteur 74.

La face transversale verticale arrière 74 est reliée à la face horizontale supérieure 70 par une face transversale 78, qui est inclinée de bas en haut et d'arrière en avant, ici selon un angle sensiblement égal à 45°, et qui s'étend ainsi en regard de la face transversale inclinée de fond 64 et parallèlement à cette dernière pour définir entre les deux surfaces parallèles 64 et 78 un canal incliné.

Le poussoir 50, aussi appelé palpeur, est une pièce moulée en matière plastique dont le corps principal est une plaque horizontale rectangulaire 80 qui, en position montée et comme on peut le voir notamment aux figures 2 et 3, s'étend globalement parallèlement à l'axe A à l'intérieur du logement 52.

La plaque 80 est délimitée par des faces horizontales inférieure 82 et supérieure 84 qui, dans la position de repos du poussoir illustré aux figures 2 et 5, sont parallèles à l'axe A.

La partie d'extrémité avant 86 du poussoir de commande 50 est une barre cylindrique circulaire d'orientation transversale dont la longueur selon la direction transversale est supérieure à la largeur de la plaque 80 de manière que ses extrémités transversales opposées 88 en forme de tenons cylindriques soient reçues en coulissement longitudinal et en rotation dans une rainure correspondante 62.

La partie d'extrémité avant en forme de barre transversale cylindrique 86 est ainsi guidée en coulissement longitudinal dans les deux sens par les rainures 62 dans le logement 52.

La partie arrière de la plaque 80 comporte une lumière 90 d'orientation longitudinale qui s'étend verticalement à travers la plaque 80 et qui est prévue pour recevoir, avec jeu longitudinal comme on peut le voir notamment aux figures 2 et 3, l'ergot de commande 66.

La lumière 90 est délimitée longitudinalement vers l'avant par une face transversale verticale 92 et longitudinalement vers l'arrière par une face transversale cylindrique convexe 94 qui est prévue pour coopérer avec la face arrière inclinée 78 formant rampe de montée de l'ergot de commande 66.

De la même manière, la plaque 80 est délimitée transversalement vers l'arrière par une face transversale verticale 95 qui se prolonge à sa partie supérieure par une surface cylindrique convexe 96 prévue pour coopérer avec la face transversale inclinée 64 formant rampe de descente.

Dans sa position montée de repos illustrée aux figures 2 et 5, le poussoir 50 est maintenu dans sa position horizontale parallèle à l'axe A par deux marches transversales et opposées 98 adjacentes à l'ergot 66 et sur lesquelles prennent appui verticalement les portions en vis-à-vis de la face horizontale inférieure 82 de la plaque 80 du poussoir 50.

Sous l'action des moyens élastiques 38 et de la tige de commande 36, le poussoir 50 est sollicité élastiquement vers sa position basse reculée, de repos, illustrée aux figures 2 et 5 dans laquelle la face arrondie 96 de la partie d'extrémité arrière 100 de la plaque 80 du poussoir 50 est en appui axial contre la partie inférieure de la face transversale inclinée de fond 64 avec cette partie arrière 100 qui s'étend en partie à l'intérieur du couloir de clef 40.

Dans cette même position de repos, la face arrondie 94 d'extrémité arrière de la lumière 90 s'étend en regard, mais avec jeu longitudinal, de la face transversale inclinée 78 formant rampe de montée de l'ergot de commande 66.

Lorsque l'on introduit une clef 42 dans le couloir de clef 40, axialement d'arrière en avant, sa face transversale d'extrémité avant 46 vient coopérer avec la face transversale d'extrémité arrière 95 du poussoir 50 pour déplacer globalement ce dernier axialement d'arrière en avant à partir de sa position basse reculée de repos illustrée aux figures 2 et 5.

Lors de ce mouvement de coulissement axial d'arrière en avant, la face arrondie 94 de la lumière 90 vient en contact avec la rampe 78 de l'ergot de commande 66, ce qui provoque globalement un mouvement de montée verticale vers le haut de la partie d'extrémité arrière 100 du poussoir de commande 50, tandis que sa partie d'extrémité avant 86, 88 continue d'être guidée en coulissement longitudinal d'arrière en avant dans les rainures 62, tout en pivotant légèrement autour de son axe transversal au fur et à mesure de la montée et de l'avancement de la partie d'extrémité arrière 100.

Le mouvement de coulissement du poussoir 50 pour agir sur la tige 36 et provoquer le changement d'état de l'interrupteur se poursuit jusqu'à introduction complète de la tige de clef 42, sa face d'extrémité libre avant 46 pouvant par exemple venir en butée contre la face transversale verticale arrière 74 de l'ergot 66 ou rester à distance axiale de cette dernière.

Lorsque l'on retire la clef, axialement d'avant en arrière, et sous l'action des moyens élastiques 38 et de la tige 36, le poussoir de commande 50 se déplace globalement axialement d'avant en arrière en partant de la position illustrée aux figures 3 à 6.

Lors de ce coulissement axial, la surface arrondie 96 de sa partie arrière coopère avec la face transversale inclinée de fond 64 formant rampe de descente pour provoquer un mouvement globalement de descente verticalement vers le bas de la partie d'extrémité arrière 100, jusqu'à ce que le poussoir 50 vienne à nouveau occuper sa position arrière reculée illustrée notamment aux figures 2 et 5 dans laquelle la partie arrondie 96 est en butée axiale contre la face transversale inclinée 64 et dans laquelle la face inférieure 82 de la plaque 50 et en appui vertical sur les marches 98.

Les formes de la partie arrière 100 du poussoir 50 et les formes complémentaires du rotor 16, 18 avec son logement 52 sont telles que, en position introduite de la clef 42, le poussoir 50 n'exerce aucun effort axial intempestif sur la clef 42 tendant à repousser axialement cette dernière d'avant en arrière, le seul effort appliqué sur la partie d'extrémité avant de la tige 44 de la clef 42 étant vertical et plaquant cette dernière vers le bas en appui contre la face horizontale inférieure 39 du couloir de clef 40.

## Revendications

1. Dispositif d'antivol (10), notamment de véhicule automobile, du type comportant un interrupteur électrique (34) pour la détection de l'introduction, d'arrière en avant, d'une clef (42, 44, 46) dans l'antivol sous l'action d'un poussoir (50) de commande du déclenchement de l'interrupteur qui est monté mobile en coulissement, dans les deux sens et parallèlement à la direction (A) d'introduction de la clef, sous l'action de la clef (42, 46) et à l'encontre d'un effort élastique (38) qui rappelle le poussoir en butée vers une position arrière de repos en l'absence de clef,
caractérisé en ce que le poussoir (50) est monté coulissant longitudinalement dans un logement (52) d'un corps (16, 18) comportant des moyens (62) de guidage en coulissement de la partie d'extrémité avant (86) du poussoir, et en ce que la partie d'extrémité arrière (100) du poussoir, sur laquelle agit la clef, coopère avec des moyens (66, 78) du corps (16, 18) formant rampe pour provoquer un déplacement de cette partie arrière, selon une direction inclinée par rapport à la direction de coulissement entre une position reculée et basse de repos, correspondant à la position arrière de repos du poussoir et une position avancée et haute de déclenchement.

2. Dispositif selon la revendication 1, caractérisé en ce que la partie d'extrémité avant (86) du poussoir (50) se présente sous la forme d'une barre transversale de déclenchement dont les extrémités opposées (88) sont guidées dans des rainures (62) parallèles à la direction de coulissement du poussoir qui sont formées dans ledit corps (16, 18).

3. Dispositif selon la revendication 2, caractérisé en ce que la barre transversale avant (86) du poussoir (50) est cylindrique circulaire.

4. Dispositif selon l'une quelconque des revendications précédentes, caractérisé en ce que le poussoir (50) comporte un corps en forme de plaque (80), sensiblement parallèle à la direction d'introduction de la clef (42, 46), qui comporte une lumière longitudinale (90) à travers laquelle s'étend verticalement un ergot (66) du corps (16, 18) dont la face transversale arrière (78) coopère avec un bord transversal arrière (94) de la lumière (90) pour constituer des moyens à rampe qui provoquent le déplacement de la partie d'extrémité arrière (100) du poussoir de sa position basse reculée vers sa position haute avancée.

5. Dispositif selon la revendication 4, caractérisé en ce que la face transversale arrière (78) de l'ergot (66) est inclinée de bas en haut et d'arrière en avant pour constituer une rampe de montée du poussoir (50) vers sa position haute avancée, et en ce que le bord transversal arrière (94) de la lumière (90) du poussoir (50) est arrondi pour coopérer avec la rampe de montée (78).

6. Dispositif selon l'une quelconque des revendications 4 ou 5, caractérisé en ce que le bord transversal arrière (96) du corps (80) du poussoir (50) coopère avec des moyens (64) formant rampe du corps (16, 18) pour provoquer le déplacement de la partie d'extrémité arrière (100) du poussoir (50) de sa position haute avancée vers sa position basse reculée.

7. Dispositif selon la revendication 6 prise en combinaison avec la revendication 5, caractérisé en ce que le bord transversal arrière (96) du corps (80) du poussoir (50) est arrondi pour coopérer avec une face transversale (64) du corps (16, 18) qui est inclinée de bas en haut et d'arrière en avant pour constituer une rampe de descente, parallèle à la rampe de montée (78), du poussoir (50) vers sa position basse arrière.

8. Dispositif selon l'une quelconque des revendications précédentes, caractérisé en ce que la position arrière de repos du poussoir (50) est déterminée par la venue en butée de la portion d'extrémité arrière (100, 96) du poussoir (50) contre une portion de face transversale (64) en vis-à-vis du corps.

9. Dispositif selon l'une quelconque des revendications précédentes, caractérisé en ce que ledit corps est un corps de rotor (16) monté tournant autour d'un axe (A) parallèle à la direction d'introduction de la clef (42).

10. Dispositif selon la revendication 9, caractérisé en ce que le plan qui contient la direction de coulissement de la partie d'extrémité avant (86) du poussoir (50) contient l'axe de rotation (A) du rotor (16).

11. Dispositif selon l'une quelconque des revendications précédentes, caractérisé en ce que le poussoir (50) est une pièce moulée en matière plastique.

12. Dispositif selon l'une quelconque des revendications précédentes, caractérisé en ce que le poussoir (50) est rappelé élastiquement vers sa position de repos par des moyens élastiques (38) de l'interrupteur électrique (34).
